# EUROPEAN PATENT SPECIFICATION

(11) **EP 2 374 571 B1**
(45) Date of publication and mention of the grant of the patent: **07.05.2014**
(21) Application number: 11157750.8
(22) Date of filing: 10.03.2011
(51) Int. Cl.: B23K 35/36, B23K 35/38, B23K 35/30, B23K 35/02, C22C 38/00, C22C 38/02, C22C 38/04, C22C 38/08, C22C 38/12, C22C 38/14

(54) **Flux-cored wire for gas-shielding arc welding**
Flusskerndraht zum gasabschirmendes Bogenschweißen
Fil à flux incorporé pour soudure à l'arc sous protection gazeuse

(30) Priority: 11.03.2010 JP 2010055037
(43) Date of publication of application: 12.10.2011
(73) Proprietor: Kabushiki Kaisha Kobe Seiko Sho (Kobe Steel, Ltd.), Kobe-Shi, Hyogo 651-8585 (JP)
(72) Inventor: Kan, Hou, Kanagawa 251-0014 (JP)
(74) Representative: Gillard, Richard Edward

(56) References cited:
- EP-A1- 1 707 303
- EP-A1- 2 289 661
- JP-A- 8 099 192
- JP-A- 2007 144 516
- US-A1- 2002 003 135
- US-A1- 2003 116 550

## Description

### BACKGROUND OF THE INVENTION

### Technical Field

The present invention relates to a flux-cored wire for gas-shielded arc welding of steels having a tensile strength on the order of 490 to 670 MPa. More specifically, the present invention relates to a flux-cored wire for gas-shielded arc welding which gives a weld metal having satisfactory low-temperature toughness.

### Background Art

Energy development has been performed in colder-climate areas and colder-climate sea areas in recent years, and structures in these cold-climate areas and cold-climate sea areas have practically used steels for low-temperature uses. However, demands have been made to provide steels having higher toughness for use in structures in such cold-climate areas and cold-climate sea areas, because the structures have been designed so as to have properties more adoptable to climate conditions in the areas and sea areas in which the structures are operated, in addition to customary low-temperature toughness. Additionally, there have been increasing demands to adopt flux-coredwires to welding of the steels for low temperature uses so as to achieve higher efficiency and easier operation of welding without the need of expertise.

To meet such demands on low-temperature toughness, Japanese Unexamined Patent Application Publication (JP-A) No. H11 (1999) -245066 and JP-A No. 2006-104580, for example, propose flux-cored wires.

Specifically, JP-A No. H11(1999)-245066 discloses a technique for improving low-temperature toughness of aweldmetal by incorporating 0.30 to 3.00 percent by mass of nickel (Ni) to the flux-cored wire and whereby lowering the transition temperature of brittle fracture (brittle transition temperature). The flux-cored wire proposed according to this technique, however, suffers from insufficient resistance to sulfide stress corrosion cracking of the weld metal when the flux-cored wire contains Ni in a high content and whereby the weld metal has, for example, a Ni content of more than 1. 0 percent by mass. The sulfide stress corrosion cracking is remarkably generated in a hydrogen sulfide atmosphere and is a kind of hydrogen corrosion cracking, in which hydrogen generated as a result of a corrosion reaction forms hydrogen sulfide which invades into the steel in a large amount. The sulfide stress corrosion cracking is especially remarkably generated in a heat-affected zone affected by welding and a surface of a fitted weld bead to which a final welding pass and tempering have not been applied. For this reason, a weld metal formed in welding of pressure vessels such as petroleum pipe lines and liquefied petroleum gas (LPG) tanks should have a Ni content controlled to be 1.0 percent by mass or less as specified typically by National Association of Corrosion Engineers (NACE).

JP-A No. 2006-104580 disclose a technique of increasing low-temperature toughness of a weld metal by incorporating 1.5 to 3.0 percent by mass of manganese (Mn) and 0.07 to 0.20 percent by mass of aluminum (A1) . The flux-cored wire disclosed herein may further contain 0.4 to 2.5 percent by mass of Ni according to necessity.

EP 2 289 661 discloses a flux cored wire for gas shielded arc welding of high-strength steel comprising a steel sheath, and a flux filled therein, wherein the flux cored wire comprises, by mass% with respect to the total mass of the flux cored wire: C: 0.03 to 0.10%, Si: 0.25 to 0.7%, Mn: 1.0 to 3.0%, Ni: 1.0 to 3.5%, B: 0.001 to 0.015%, Cr: limited to 0.05% or less, and A1: limited to 0.05% or less, and in the flux, TriO₂:2.5 to 7.5%, SiO₂: 0.1 to 0.5%, ZrO₂: 0.2 to 0.9%, and Al₂O₃: 0.1 to 0.4%; and the remainder comprising: Fe, arc stabilizer, and unavoidable impurities; and wherein the total amount of hydrogen in the flux cored wire is in 15ppm or less.

JP 2007 144516 discloses a gas-shielded arc welding flux cored wire comprising 0.04 to 0.11% C, 0.40 to 0.75% Si, 1.30 to 2.50% Mn, 0.10 to 2.50% Ni, 0.10 to 1.00% Cr, 0.10 to 1.00% Mo, 0.06 to 0.30% Ti and 290% Fe. The content of N is regulated to ≤0.015%. The wire further comprises the fluoride and/or oxide of an alkali metal(s) and an alkaline-earth metal(s). B, A1 and Mg, and the balance is inevitable impurities, and F(x) =576.9C + 34.1Si + 80.1Mn + 1.5Ni - 22.8Cr - 6.8Mo - 83.1Ti is ≥100.

US 2003/0116550 discloses a basic flux cored wire having a mild steel or an alloy steel sheath filled with flux, characterised in that the flux essentially consists of, with respect to the total weight of the wire: 0.3 to 3.0% Ti and Ti oxide (TiO₂-converte value); 1.0 to 2.5% Si and Si oxide (SiO₂-converted value); 0.1 to 1.5% Mg and Mg oxide (MgO-converted value); 1.5 to 4.0% Mn and Mn oxide (MnO-converted value); 0.2 to 1.5% A1 and A1 oxide (Al₂O₃-converted value); 0.1 to 1.0% Zr and Zr oxide (ZrO₂-converted value); 0.2 to 3.5% CaF₂; and 0.01 to 0.5% K₂O, with the proviso that the components satisfy the basicity of 0.5 to 4.5 in the basicity equation (1) defined as B= (CaF₂+MgO+MnO+K₂O) / (TiO₂+SiO₂+Al₂C₃+ZrO₂) .

JP 8 099192 discloses a flux cored wire for gas shielded arc welding which is formed by filling a flux into a mild steel or alloy steel sheath. The flux cored wire contains, by the total weight of the wire, 3 to 10% TiO₂, 0.3 to 2.0% Al₂O₃, 0.01 to 1.0% MgO, 0.3 to 1.0% SiO₂, 0.1 to 0.8% ZrO₂, 0.5 to 1.5% Si, 1.0 to 3.0 Mn, 0.1 to 0.5% A1 and 0.05 to 0.7% alkaline metal fluoride and/or alkaline metal, oxide (value converted to the univalent oxide of an alkaline metal). The value of (Al+Si+Al₂O₃+MgO}/(SiO₂}x (alkaline metal fluoride + oxide) (where the alkaline metal fluoride and oxide are the value converted to the univalent oxide of the alkaline metal) is 10 to 100.

### SUMMARY OF INVENTION

### Technical Problem

However, the know techniques have the following problems . As is described above, the flux-cored wire disclosed in JP-A No. H11(1999)-245066 suffers from insufficient resistance to sulfide stress corrosion cracking of the weld metal topically when the flux-cored wire contains Ni in a high content and the resulting weld metal have a Ni content of more than 1.0 percent by mass.

The flux-cored wire disclosed in JP-A No. 2006-104580 is intended to improve the low-temperature toughness of the weld metal by the addition of Mn and A1, but the A1 component in the flux-cored wire increases the spatter during welding and thereby impair weldability.

Under these circumstances, an object of the present invention is to provide a flux-cored wire for gas-shielded arc welding, which shows good weldability and gives a weld metal having satisfactory low-temperature toughness even when the weld metal has a low Ni content.

### Solution to Problem

The present invention provides, in an embodiment, a flux-cored wire for gas-shielded arc welding, which includes a steel sheath; and a flux filled in the sheath, in which the wire as a whole contains, as its chemical composition based on the total mass of the wire, carbon (C) in a content of 0.03 to 0.07 percent by mass, silicon (Si) in a content of 0.10 to 0. 50 percent by mass, manganese (Mn) in a content of 1.0 to 4.0 percent by mass, titanium (Ti) in a content of 0.06 to 0.30 percent by mass, nickel (Ni) in a content of 0.50 to 0.95 percent by mass, molybdenum (Mo) in a content of 0.01 to 0.30 percent by mass, boron (B) in a content of 0.002 to 0.008 percent by mass, fluorine (F) in a content of 0.05 to 0.40 percent by mass, and iron (Fe) in a content of 85 to 93 percent by mass, and the wire as a whole has an aluminum (Al) content controlled to be 0.05 percent by mass or less.

In the flux-cored wire for gas-shielded arc welding, the flux preferably contains, based on the total mass of the wire, TiO₂ in a content of 4.5 to 8.5 percent by mass, ZrO₂ in a content of 0.04 to 0.50 percent by mass, SiO₂ in a content of 0.10 to 0.50 percent by mass, Al₂O₃ in a content of 0.02 to 0.80 percent by mass, and Mg in a content of 0.20 to 0.70 percent by mass.

The flux-cored wire for gas-shielded arc welding preferably has a ratio of the total content of Ti and Mo to the total content of F and Al [([Ti] + [Mo]) / ([F] + [Al])] of 0. 5 to 2.5, in which [Ti], [Mo], [F], and [Al] represent the contents of Ti, Mo, F, and Al, respectively, in the wire.

The flux-cored wire for gas-shielded arc welding according to the present invention gives a weld metal having a low Ni content of 1.0 percent by mass or less, but the weld metal, even at such a low Ni content, has satisfactory low-temperature toughness, and the flux-cored wire shows good weldability, because of optimized contents of the other composition.

### BRIEF DESCRIPTION OF DRAWINGS

FIG. 1 is a graph showing the relation between the total content of F and Al and the total content of Ti and Mo with the abscissa indicating the total content of F and Al and the ordinate indicating the total content of Ti and Mo; and
FIGS. 2A, 2B, 2C, and 2D depict profiles (cross sections) of flux-cored wires.

### DESCRIPTION OF EMBODIMENTS

A flux-cored wire for gas-shielded arc welding according to an embodiment of the present invention will be illustrated in detail below. The flux-cored wire for gas-shielded arc welding according to the present invention includes a steel sheath; and a flux filled in the sheath and has a wire gage (diameter) of 1.0 to 2.0 mm. The flux-cored wire as a whole contains, as its chemical composition based on the total mass of the wire, C in a content of 0.03 to 0.07 percent by mass, Si in a content of 0.10 to 0.50 percent by mass, Mn in a content of 1.0 to 4.0 percent by mass, Ti in a content of 0.06 to 0.30 percent by mass, Ni in a content of 0.50 to 0.95 percent by mass, Mo in a content of 0.01 to 0.30 percent by mass, B in a content of 0.002 to 0.008 percent by mass, F in a content of 0.05 to 0.40 percent by mass, and Fe in a content of 85 to 93 percent by mass and has an Al content controlled to be 0.05 percent by mass or less.

The flux-cored wire for gas-shielded arc welding, by having the above-specified composition, allows the weld metal to have a Ni content of 1.0 percent by mass or less. Thus, the weld bead given by the flux-cored wire according to the present invention through welding protects the steel from invasion of hydrogen in a large amount, which hydrogen is generated as a result of a corrosion reaction, and thereby shows high resistance to sulfide stress corrosion cracking even when the weld bead is placed typically in a hydrogen sulfide atmosphere. In addition, the flux-cored wire, by optimizing the contents of the other composition than Ni, allows the weld bead to have satisfactory low-temperature toughness and shows good weldability.

In a preferred embodiment of the flux-cored wire for gas-shielded arc welding, the flux contains, typically based on the total mass of the wire, TiO₂ in a content of 4.5 to 8.5 percent by mass, ZrO₂ in a content of 0.04 to 0.50 percent by mass, SiO₂ in a content of 0.10 to 0.50 percent by mass, Al₂O₃ in a content of 0.02 to 0.80 percent by mass, and Mg in a content of 0.20 to 0.70 percent by mass. Thus, the flux-cored wire according to the preferred embodiment of the present invention shows further satisfactory weldability and gives a weld bead having a good bead shape without the loss of toughness thereof, by setting the contents of the respective flux components within optimal ranges.

In another preferred embodiment of the present invention, the flux-cored wire has a ratio of the total content of Ti and Mo to the total content of F and Al [([Ti] + [Mo]) / ([F] + [Al])] in the range of 0.5 to 2.5 while having the above-specified composition. This further increases the toughness of the weld metal while maintaining satisfactory weldability, because the total content of Ti and Mo, both of which work to increase the toughness of the weld bead, is optimized by the ratio of the total content of Ti and Mo to the total content of Al and F.

Next, preferred ranges of the composition of the weld metal derived from the flux-cored wire for gas-shielded arc welding according to the present invention will be described.

### "C content: 0.04 to 0.08 percent by mass"

Carbon (C), if present at a certain content, is capable of stabilizing cementite and thereby stabilizing the toughness. The weld metal, if having a C content of less than 0.04 percent by mass, may often have insufficient strength and may have insufficiently stabilized toughness. In contrast, the weld metal, if having a C content of more than 0.08 percent by mass, may have somewhat poor resistance to hot cracking. For these reasons, the weld metal preferably has a C content of 0.04 to 0.08 percent by mass.

### "Si content: 0.20 to 0.45 percent by mass"

Silicon (Si) acts as a deoxidizer and affects the microstructure. The weld metal, if having an excessively high Si content, may cause the generation of ferrite side plates in a larger amount at the prior austenite (γ) grain boundary, often resulting in insufficient toughness. The weld metal, if having a Si content of less than 0.20 percent by mass, may often cause blow holes due to insufficient deoxidation. In contrast, the weld metal, if having a Si content of more than 0.45 percent by mass, maybe difficult to suppress the generation of the ferrite side plates at the prior austenite (γ) grain boundary, often resulting in insufficient toughness. For these reasons, the weld metal preferably has a Si content of 0.25 to 0.45 percent by mass.

### "Mn content: 0.5 to 2.0 percent by mass"

Manganese (Mn) acts as a deoxidizer and affects the strength and toughness. The weld metal, if having a Mn content of less than 0.5 percent by mass, may often have insufficient strength and may have somewhat poor toughness. The weld metal, if having a Mn content of more than 2.0 percent by mass, may have excessively high strength and excessively high hardenability, often resulting in poor toughness. For these reasons, the weld metal preferably has a Mn content of 0.5 to 2.0 percent by mass.

### "Ti content: 0.030 to 0.080 percent by mass"

Titanium (Ti) is present as an oxide or solid-solution in the weld metal and, when present as an oxide, plays a role as a nucleus of acicular ferrite in the prior austenite (γ) grains and contributes to improvement of the toughness. Specifically, the acicular ferrite is formed with titanium oxide as a nucleus in the prior austenite (γ) grains. The acicular ferrite contributes to the formation of a finermicrostructure to thereby increase the toughness. The weld metal, if having a Ti content of less than 0.030 percent by mass, may cause more coarse ferrite due to insufficient nucleation, of ten resulting inpoor toughness. In contrast, the weld metal, if having a Ti content of more than 0. 080 percent by mass, may contain an excessively large amount of dissolved titanium as a solid solution and may thereby have excessively high strength, often resulting in poor toughness. For these reasons, the weld metal preferably has a Ti content of 0.030 to 0.080 percent by mass.

### "Ni content: 0.50 to 1.0 percent by mass"

Nickel (Ni) is capable of lowering the brittle transition temperature and thereby improving the toughness. However, Ni, if contained in an excessively large amount, may often cause hot cracking (solidification cracking). The Ni content in the weld metal is controlled herein to be 1 percent by mass or less in accordance with the NACE Standards. However, the Ni content is preferably 0.50 percent by mass or more, because the weld metal, if having a Ni content of less than 0.50 percent by mass, may not show sufficiently effectively improved toughness by the action of Ni.

### "Mo content: 0.08 to 0.15 percent by mass"

Molybdenum (Mo), if present in a content of 0.08 percent by mass or more, ensures sufficient strength. However, Mo, if present in an excessively high content, may elevate the brittle transition temperature, often resulting in poor toughness. In the weld metal, if having a Mo content of 0.15 percent by mass or less, the effect causing poor toughness is trivial. Accordingly, the weld metal preferably has a Mo content of 0.08 to 0.15 percent by mass.

### "B content: 0.003 to 0.006 percent by mass"

Boron (B) segregates into the prior austenite (γ) grain boundary, thereby suppresses the generation of grain-boundary ferrite, and increases the toughness. However, the weld metal, if having an excessively high B content, may become susceptible to hot cracking (solidification cracking). The weld metal, if having a B content of less than 0.003 percent by mass, may fail to have a sufficiently improved toughness. In contrast, the weld metal, if having a B content of more than 0.006 percent by mass, may have insufficient resistance to hot cracking. For these reasons, the weld metal preferably has a B content of 0.003 to 0.006 percent by mass.

### "Al content: controlled to be 0.01 percent by mass or less"

Aluminum (Al) is present in the weld metal as an oxide, which often impedes the nucleation of the acicular ferrite by the action of titanium oxide at the prior austenite (γ) grain boundary. Al, if present in the weld metal in a content of 0.01 percent by mass or less, may not substantially impede the nucleation of the acicular ferrite.

### "O (oxygen) content: 0.040 to 0.070 percent by mass"

Most of oxygen (O) in the weld metal is believed to be present as oxides. The weld metal, if having an excessively high oxygen content, may often show an insufficient upper shelf energy in an impact test. For this reason, the weld metal is preferably controlled to have a lower oxygen content so as to exhibit higher toughness. However, the flux-cored wire, if having an excessively low oxygen content, may have remarkably inferior weldability and may suffer from increased spatter and inferior all-position weldability, thus being unpractical. Specifically, the weld metal, if having an O content of typically less than 0.040 percent by mass, may often show insufficient weldability. In contrast, the weld metal, if having an O content of typically more than 0. 070 percent by mass, may have inferior toughness due to a reducedupper shelf energy. For these reasons, the weld metal has an O content of preferably 0.040 to 0.070 percent by mass, and more preferably 0.040 to 0.060 percent by mass.

Next, reasons why the values of the composition of the flux-cored wire for gas-shielded arc welding according to the present invention are specified will be described.

### "C content: 0.03 to 0.07 percent by mass based on the total mass of the wire"

The carbon (C) content in the flux-cored wire is specified to be 0.03 to 0.07 percent by mass based on the total mass of the wire, to allow the weld metal to have a C content of 0.04 to 0.07 percent by mass. The C content in the wire is more preferably 0. 04 to 0.06 percent by mass based on the total mass of the wire. Exemplary carbon sources herein include graphite, Fe-Mn, Fe-Si, and the addition of carbon to the steel sheath. Such a carbon source may be added to the flux or steel sheath, or both. The flux-cored wire, if having a C content of less than 0.03 percent by mass, often causes the weld metal to have insufficient strength and to show insufficiently effectively stabilized toughness. In contrast, the flux-cored wire, if having a C content of more than 0.07 percent by mass, causes the weld metal to have inferior resistance to hot cracking.

### "Si content: 0.10 to 0.50 percent by mass based on the total mass of the wire"

The silicon (Si) content in the flux-cored wire is specified to be 0.10 to 0.50 percent by mass based on the total mass of the wire, to allow the weld metal to have a Si content of 0.20 to 0.45 percent by mass. The Si content in the wire is more preferably 0.15 to 0.45 percent by mass based on the total mass of the wire. Exemplary Si sources include Fe-Si, Si-Mn, and the addition of Si to the steel sheath. Such a Si source may be added to the flux or steel sheath, or both. The flux-cored wire, if having a Si content of less than 0.10 percent by mass, often causes insufficient deoxidation and thereby causes blow holes in the weld metal. In contrast, the flux-cored wire, if having a Si content of more than 0.50 percent by mass, embrittles the matrix ferrite and causes the weld metal to have insufficient low-temperature toughness.

### "Mn content: 1. 0 to 4.0 percent by mass based on the total mass of the wire"

The manganese (Mn) content in the flux-cored wire is specified to be 1.0 to 4.0 percent by mass based on the total mass of the wire to allow the weld metal to have a Mn content of 0.5 to 2.0 percent by mass. The Mn content in the wire is more preferably 1.5 to 3.5 percent by mass based on the total mass of the wire. Exemplary Mn sources include metal Mn, Fe-Mn, Si-Mn, and the addition of Mn to the steel sheath. Such a Mn source may be added to the flux or steel sheath, or both. The flux-cored wire, if having a Mn content of less than 1.0 percent by mass, causes the weld metal to have insufficient strength, resulting in inferior toughness. In contrast, the flux-cored wire, if having a Mn content of more than 4.0 percent by mass, causes the weld metal to have excessively high strength and excessively high hardenability, resulting in inferior toughness.

### "Ni content: 0.50 to 0.95 percent by mass based on the total mass of the wire"

According to known techniques, nickel (Ni) is added in a large amount of more than 1.0 percent by mass to a flux-cored wire so as to ensure satisfactory low-temperature toughness of a weld metal. In this case, the weld metal, if having a Ni content of typically more than 1.0 percent by mass, has inferior resistance to sulfide stress corrosion cracking. In contrast, the weld metal as obtained according to the present invention has a Ni content of 1.0 percent by mass or less in accordance with the NACE Standards as mentioned above, so as to prevent the sulfide stress corrosion cracking. Consequently, the Ni content in the flux-cored wire is specified to be 0.95 percent by mass or less so as to allow the weld metal to have a Ni content of 1.0 percent by mass or less. However, the weld metal, if having a Ni content of less than 0.50 percent by mass, may not have sufficiently effectively improved toughness through the addition of Ni. To avoid this, the flux-cored wire contains Ni in a content of 0.50 percent by mass or more to allow the weld metal to have a Ni content of 0.50 percent by mass or more. Exemplary Ni sources include metal Ni, Ni-Mg, and the addition of Ni to the steel sheath. Such a Ni source may be added to the flux or steel sheath, or both.

### "B content: 0.002 to 0.008 percent by mass based on the total mass of the wire"

The boron (B) content in the flux-cored wire is specified to be 0.002 to 0.008 percent by mass based on the total mass of the wire to allow the weld metal to have a B content of 0.003 to 0.006 percent by mass. The B content in the wire is more preferably 0.003 to 0.007 percent by mass. Exemplary B sources include Fe-Si-B alloys. The flux-cored wire, if having a B content of less than 0.002 percent by mass, fails to effectively improve the toughness of the weld metal. In contrast, the flux-cored wire, if having a B content of more than 0.008 percent by mass, causes the weld metal to have insufficient resistance to hot cracking.

### "Fe content: 85 to 93 percent by mass based on the total mass of the wire"

The flux-cored wire, when used for welding of low-alloy steels, may further contain other components such as slag-forming materials and arc stabilizers according to an intended use, in addition to the alloy composition. In the case of a flux-cored wire for use in all-position welding, the flux-cored wire, if having an Fe content of less than 85 percent by mass based on the total mass of the wire, suffers from excessive slag generation and often suffers from welding defects such as slag inclusions. The flux-cored wire, if having an Fe content of 93 percent by mass, impedes the addition of the essential alloy composition. Exemplary Fe sources include, in addition to the steel sheath, iron powders and iron-based alloys to be added to the flux.

In addition to the above-specified chemical composition, contents of the following four elements, i.e., Ti, Mo, Al, and F, and the relationship between them are important in the flux-cored wire according to the present invention.

### "Ti content: 0.06 to 0.30 percent by mass based on the total mass of the wire"

Thetitanium (Ti) content in the flux-coredwire is specified to be 0.06 to 0.30 percent by mass to allow the weld metal to have a Ti content of 0.030 to 0.080 percent by mass. When titanium is present as a titanium oxide and a titanium alloy, the Ti content is indicated by converting the content of the titanium oxide and titanium alloy into a content as elemental titanium. The Ti content in the wire is more preferably 0.10 to 0.25 percent by mass. Exemplary Ti sources include rutile, other titanium oxides, Fe-Ti, and the addition of Ti to the steel sheath. Such a Ti source may be added to the flux or steel sheath, or both. The flux-cored wire, if having a Ti content of less than 0.06 percent by mass, causes coarse ferrite due to insufficient nucleation and often causes the weld metal to have insufficient toughness. The flux-cored wire, if having a Ti content of more than 0.30 percent by mass, causes the weld metal to contain dissolved Ti as a solid solution in an excessively high content and to have excessively high strength, often resulting in insufficient toughness.

### "Mo content: 0.01 to 0.30 percent by mass based on the total mass of the wire"

The Mo content in the flux-cored wire is specified to be 0.01 to 0.30 percent by mass based on the total mass of the wire to allow the weld metal to have a Mo content of 0.08 to 0.15 percent by mass. The Mo content in the wire is more preferably in the range of 0.05 to 0.20 percent by mass. Exemplary Mo sources include metal Mo, Fe-Mo, and the addition of Mo to the steel sheath. Such a Mo source may be added to the flux or steel sheath, or both. The flux-cored wire, if having a Mo content of less than 0.01 percent by mass, causes the weld metal to have insufficient strength. In contrast, the flux-cored wire, if having a Mo content of more than 0.30 percent by mass, elevates the brittle transition temperature and often causes the weld metal to have insufficient toughness.

### "Al content: controlled to be 0.05 percent by mass or less based on the total mass of the wire"

The aluminum (Al) content in the flux-cored wire is controlled to be 0.05 percent by mass or less based on the total mass of the wire, to control the weld metal to have an Al content of 0.01 percent by mass or less. The flux-cored wire, if having an Al content of more than 0.05 percent by mass, causes the weld metal to have a higher content of Al present as oxides, which often impede the nucleation of the acicular ferrite by the action of titanium oxide in the prior austenite (γ) grain boundary. In addition, Al in the flux-cored wire causes the spatter, and the flux-cored wire, if having an Al content of more than 0.05 percent by mass, shows inferior weldability due to increased spatter generation.

### "F content: 0.05 to 0.40 percent by mass based on the total mass of the wire"

Fluorine (F) is added to the flux typically as fluorine compounds. The flux-cored wire according to the present invention contains fluorine compounds in a content in terms of fluorine of 0.05 to 0.40 percent by mass. The flux-cored wire, if having a F content of less than 0.05 percent by mass based on the total mass of the wire, fails to have a sufficiently low hydrogen content, and this increases diffusible hydrogen in the weld metal and causes the weld metal to be susceptible to cold cracking. In contrast, theflux-coredwire, if having a F content of more than 0.40 percent by mass, suffers from increased spatter generation and shows inferior weldability.

In a preferred embodiment, the flux-cored wire according to the present invention has the following composition in the flux, in addition to the above components.

### "TiO₂ content: 4.5 to 8.5 percent by mass based on the total mass of the wire"

The flux in the present invention preferably contains TiO₂ in a content of 4.5 to 8.5 percent by mass based on the total mass of the wire to allow the weld metal to have further higher toughness. The flux, if having a TiO₂ content of less than 4.5 percent by mass based on the total mass of the wire, may fail to contain a sufficient amount of titanium oxides, which is effective to increase the toughness of the weld metal, and may fail to increase the toughness of the weld metal due to the generation of grain boundary ferrite. The flux, if having a TiO₂ content of more than 8.5 percent by mass based on the total mass of the wire, may cause the weld metal to have a higher oxygen content to thereby show insufficient toughness. The flux more preferably has a TiO₂ content of 5.0 to 8.0 percent by mass. Exemplary TiO₂ sources include rutile and other titanium oxides.

### "ZrO₂ content: 0.04 to 0.50 percent by mass based on the total mass of the wire"

The flux preferably contains ZrO₂ in a content of 0.04 to 0.50 percent by mass based on the total mass of the wire. The flux, if having a ZrO₂ content of less than 0.04 percent by mass, may cause insufficient smoothness of the bead in flat-position and horizontal fillet welding. In contrast, the flux, if having a ZrO₂ content of more than 0.50 percent by mass, may often cause the weld bead to have poorly equal legs (to have poor equality in leg length) in horizontal fillet welding and may cause the bead to have a convex or convex-like shape in vertical welding. The flux more preferably has a ZrO₂ content of 0.05 to 0.45 percent by mass. Exemplary ZrO₂ sources include zircon sand and zirconia.

### "Al₂O₃ content: 0.02 to 0.80 percent by mass based on the total mass of the wire"

The flux preferably contains Al₂O₃ in a content of 0.02 to 0.80 percent by mass based on the total mass of the wire. The flux, if having an Al₂O₃ content of less than 0.02 percent by mass, may tend to cause the weld bead to have inferior smoothness in flat-position and horizontal fillet welding. In contrast, the flux, if having an Al₂O₃ content of more than 0.80 percent by mass, mayoften cause the weldbead to have inferior wettability in flat-position and horizontal fillet welding and may often increase the spatter. The flux more preferably has an Al₂O₃ content of 0.03 to 0.60 percent by mass. Exemplary Al₂O₃ sources include alumina.

### "SiO₂ content: 0.10 to 0.50 percent by mass based on the total mass of the wire"

The flux preferably contains SiO₂ in a content of 0.10 to 0.50 percent by mass based on the total mass of the wire. The flux, if having a SiO₂ content of less than 0.10 percent by mass, may tend to cause the weld bead to have inferior smoothness in flat-position and horizontal fillet welding. In contrast, the flux, if having a SiO₂ content of more than 0.50 percent by mass, may tend to cause poor porosity resistance in horizontal fillet welding and to cause the weld bead to have a convex or convex-like shape in vertical position welding. The flux more preferably has a SiO₂ content of 0.15 to 0.45 percent by mass. Exemplary SiO₂ sources include silica, potassium glass, and soda-lime glass.

### "Mg content: 0.20 to 0.70 percent by mass based on the total mass of the wire"

The flux preferably contains Mg in a content of 0.20 to 0.70 percent by mass based on the total mass of the wire. The flux, if having a Mg content of less than 0.20 percent by mass, may not undergo sufficient deoxidation and may often cause the weld metal to have insufficient toughness. In contrast, the flux, if having a Mg content of more than 0.70 percent by mass, may increase the spatter and may often show insufficient weldability. The flux more preferably has a Mg content of 0.25 to 0.65 percent by mass. Exemplary Mg sources include metal Mg, Al-Mg, and Ni-Mg.

### "Ratio ([Ti] + [Mo]) / ([F] + [Al]): 0.5 to 2.5"

In another preferred embodiment of the present invention, the flux-cored wire, while having the above-specified composition, has a ratio of the total content of Ti and Mo to the total content of F and Al ([Ti] + [Mo]) / ([F] + [Al]) in the range of 0.5 to 2.5. The flux-cored wire, if having a ratio ([Ti] + [Mo]) / ([F] + [Al]) of less than 0.5 may increase the spatter and may tend to show poor weldability. In contrast, the flux-cored wire, if having a ratio ([Ti] + [Mo]) / ([F] + [Al]) of more than 2.5, may often cause the weld metal to have insufficient toughness. Control of the ratio ([Ti] + [Mo]) / ([F] + [Al]) within the range of 0.5 to 2.5 according to the present invention further increases the toughness of the weld metal while maintaining satisfactory weldability, because the total content of Ti and Mo, both of which work to increase the toughness of the weld bead, is optimized by the ratio of the total content of Ti and Mo to the total content of Al and F.

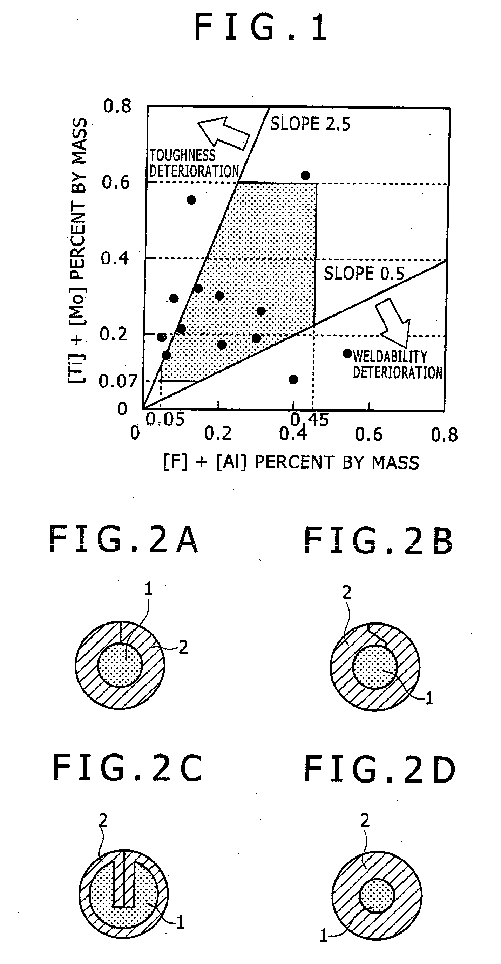

The flux-cored wire according to the present invention may further contain other components such as arc stabilizers according to necessity. The wire gage (diameter) of the flux-cored wire according to the present invention is not critical, as long as being in the range of 1.2 to 2.0 mm, but is practically preferably in the range of 1.2 to 1.6 mm. The flux-cored wire according to the present invention is not limited typically by the presence or absence of seam and by the profile of the wire. The flux-cored wire according to the present invention may have any profile such as those illustrated in FIGS. 2A, 2B, 2C, and 2D.

### Examples

A series of flux-cored wires having a wire gage (diameter) of 1.2 mm and having the compositions given in Table 1 was prepared by filling a steel sheath made of a mild steel with 13 to 20 percent by mass of a flux. The flux-cored wires were subjected to performance verification tests mentioned below.

### "Test 1. All Weld Metal Test"

Welding was performed using the flux-cored wires in Table 1 below and a steel plate having a composition given in Table 2 under testing conditions given in Table 3 to give weld metals, and the mechanical properties, chemical compositions, and microstructures of the weld metals were determined according to testing methods given in Table 4. Regarding mechanical properties, samples having a tensile strength of 640 MPa or more and an absorbed energy of 50 J or more were accepted. Wires Nos. 1 to 6 and Nos. 14 to 24 in Table 1 are flux-cored wires satisfying the conditions as specified in the present invention (Examples), and Wires Nos. 7 to No. 13 are those not satisfying the conditions specified in the present invention (Comparative Examples). The underlined data in Table 1 represents a composition out of the range specified in the present invention or a composition out of the preferred range in the present invention.

**TABLE 1**

| No. | Fe | C | Mn | Si | Ti | Ni | F (converted from K₂SiF₆) | B | Mo | Al | Mg | TiO₂ | ZrO₂ | Al₂O₃ | SiO₂ | Other composition (such as arc stabilizer) | ([Ti]+[Mol])/ ([F]+[Al]) |
|---|---|---|---|---|---|---|---|---|---|---|---|---|---|---|---|---|---|
| 1 | 89 | 0.06 | 3.5 | 0.15 | 0.14 | 0.50 | 0.25 | 0.0030 | 0.05 | 0.05 | 0.20 | 5.1 | 0.35 | 0.25 | 0.30 | 0.1 | 0.6 |
| 2 | 86 | 0.03 | 2.9 | 0.50 | 0.18 | 0.93 | 0.07 | 0.0070 | 0.03 | 0.03 | 0.30 | 8.5 | 0.15 | 0.02 | 0.20 | 0.2 | 2.1 |
| 3 | 89 | 0.04 | 1.5 | 0.11 | 0.06 | 0.70 | 0.30 | 0.0080 | 0.20 | 0.01 | 0.40 | 6.4 | 0.25 | 0.78 | 0.10 | 0.1 | 0.8 |
| 4 | 88 | 0.07 | 2.7 | 0.20 | 0.13 | 0.65 | 0.18 | 0.0050 | 0.17 | 0.02 | 0.30 | 6.4 | 0.20 | 0.05 | 0.50 | 0.4 | 1.5 |
| 5 | 91 | 0.04 | 1.4 | 0.30 | 0.28 | 0.56 | 0.12 | 0.0050 | 0.04 | 0.02 | 0.40 | 4.8 | 0.43 | 0.10 | 0.45 | 0.1 | 2.3 |
| 6 | 88 | 0.05 | 1.0 | 0.11 | 0.16 | 0.70 | 0.20 | 0.0080 | 0.01 | 0.01 | 0.65 | 8.2 | 0.05 | 0.58 | 0.15 | 0.1 | 0.8 |
| 7 | 92 | 0.03 | 1.0 | 0.05 | 0.26 | 0.55 | 0.05 | 0.0200 | 0.03 | 0.03 | 0.50 | 4.9 | 0.06 | 0.15 | 0.10 | 0.3 | 3.6 |
| 8 | 86 | 0.07 | 5.2 | 0.20 | 0.10 | 0.95 | 0.50 | 0.0070 | 0.05 | 0.04 | 0.40 | 5.6 | 0.20 | 0.02 | 0.30 | 0.4 | 0.3 |
| 9 | 85 | 0.05 | 4.0 | 0.13 | 0.15 | 0.65 | 0.06 | 0.0020 | 0.40 | 0.06 | 0.20 | 8.0 | 0.10 | 0.80 | 0.12 | 0.3 | 4.6 |
| 10 | 89 | 0.06 | 3.7 | 0.38 | 0.13 | 0.26 | 0.05 | 0.0030 | 0.01 | 0.01 | 0.80 | 5.3 | 0.04 | 0.10 | 0.06 | 0.1 | 2.3 |
| 11 | 86 | 0.02 | 1.0 | 0.50 | 0.06 | 1.00 | 0.35 | 0.0040 | 0.02 | 0.05 | 0.40 | 8.5 | 0.05 | 1.00 | 0.50 | 0.5 | 0.2 |
| 12 | 91 | 0.03 | 3.0 | 0.10 | 0.10 | 0.40 | 0.04 | 0.0010 | 0.09 | 0.01 | 0.20 | 4.5 | 0.01 | 0.02 | 0.25 | 0.2 | 3.8 |
| 13 | 95 | 0.06 | 1.0 | 0.25 | 0.40 | 0.88 | 0.40 | 0.0070 | 0.20 | 0.02 | 0.30 | 0.0 | 0.20 | 0.60 | 0.30 | 0.4 | 1.4 |
| 14 | 90 | 0.06 | 1.5 | 0.20 | 0.08 | 0.75 | 0.30 | 0.0025 | 0.25 | 0.01 | 0.10 | 5.0 | 0.20 | 0.60 | 0.30 | 0,6 | 1.1 |
| 15 | 93 | 0.03 | 1.4 | 0.15 | 0.06 | 0.55 | 0.10 | 0.0065 | 0.01 | 0.02 | 0.30 | 3.0 | 0.20 | 0.60 | 0.25 | 0.3 | 0.6 |
| 16 | 89 | 0.07 | 1.6 | 0.30 | 0.06 | 0.60 | 0.15 | 0.0030 | 0.10 | 0.01 | 0.25 | 6.0 | 0.60 | 0.60 | 0.23 | 0.4 | 1.0 |
| 17 | 89 | 0.04 | 1.9 | 0.15 | 0.18 | 0.54 | 0.08 | 0.0020 | 0.12 | 0.03 | 0.90 | 5.3 | 0.20 | 0.60 | 0.45 | 0.5 | 2.7 |
| 18 | 88 | 0.04 | 1.8 | 0.20 | 0.25 | 0.93 | 0.24 | 0.0026 | 0.08 | 0.01 | 0.45 | 7.0 | 0.20 | 0 | 0.34 | 0.5 | 1.3 |
| 19 | 85 | 0.05 | 1.0 | 0.20 | 0.28 | 0.95 | 0.31 | 0.0043 | 0.25 | 0.01 | 0.62 | 10.0 | 0.20 | 0.60 | 0.30 | 0.2 | 1.7 |
| 20 | 85 | 0.04 | 3.7 | 0.34 | 0.20 | 0.90 | 0.06 | 0.0032 | 0.14 | 0.02 | 0.23 | 7.5 | 0.20 | 0.60 | 0.80 | 0.3 | 4.3 |
| 21 | 87 | 0.06 | 2.9 | 0.18 | 0.06 | 0.58 | 0.36 | 0.0050 | 0.02 | 0.02 | 0.35 | 6.8 | 0.20 | 0.60 | 0.44 | 0.4 | 0.2 |
| 22 | 88 | 0.06 | 21 | 0.29 | 0.10 | 0.64 | 0.40 | 0.0055 | 0.09 | 0.05 | 0.40 | 6.0 | 0.20 | 0.60 | 0.46 | 0.6 | 0.4 |
| 23 | 88 | 0.05 | 2.8 | 0.48 | 0.30 | 0.66 | 0.13 | 0.0060 | 0.25 | 0.03 | 0.20 | 5.8 | 0.20 | 0.60 | 0.29 | 0.2 | 3.4 |
| 24 | 87 | 0.05 | 1.0 | 0.33 | 0.06 | 0.68 | 0.40 | 0.0070 | 0.06 | 0.02 | 0.70 | 8.0 | 0.20 | 0.60 | 0.20 | 0.7 | 0.3 |

**TABLE 2**

| Base metal | Thickness (mm) | Chemical composition (percent by mass) | | | | | | | | | |
|---|---|---|---|---|---|---|---|---|---|---|---|
| | | C | Si | Mn | P | S | Ni | Cr | Mo | Ti | B |
| SM490A | 20 | 0.15 | 0.32 | 1.34 | 0.010 | 0.001 | 0.01 | 0.03 | - | - | - |

**TABLE 3**

| | |
|---|---|
| Base metal | JIS G 3106 SM490A |
| | Thickness: 20 mm (chemical composition is given in Table 2) |
| Groove shape | 45° single V groove, root gap = 12 mm, using a backing strip |
| Wire | Flux-cored wires having the compositions given in Table 1 (wire gage (diameter): 1.2 mm) |
| Shielding gas | 80% Ar-20% CO₂, flow rate = 25 liters per minute |
| Welding position | flat-position |
| Welding condition | Current: 260 to 300 A, voltage: 28 to 32 V, speed of travel: 25 to 35 cm/min welding energy input = 1.3 to 2.5 kJ/mm |
| Number of layers | 6 layers, 12 passes |
| Preheating and interpass temperature | 140°C to 160°C |

**TABLE 4**

| | |
|---|---|
| Tensile test | JIS Z3111 No. A1 specimen, Sampling position = center of weld metal, middle of thickness |
| | Test temperature = room temperature (20°C to 23°C) |
| Impact test | JIS Z3111 No. 4 specimen, sampling position = center of weld metal, middle of thickness |
| | Test temperature = -60°C |
| Chemical composition analysis | Analysis method: JIS G 1253 and JIS Z2613 |
| | Analysis position = center of weld metal, middle of thickness |
| Microstructure observation | A specimen after final welding pass was embedded in a resin, surface of which was buffed, corroded with a 2% nitric acid ethanol solution, whose columnar structure (area which had not undergone heat cycle) was observed with an optical microscope at a magnification of 400 times, and the percentage of ferrite side plates in the field of view was calculated as an area ratio (%). The area ratios were measured in five fields of view per one specimen and averaged to give the area ratio (%) of the specimen. |

### "Test 2. Test for Resistance to Hot Cracking"

Welding was performed using the flux-cored wires in Table 1 and the steel plate having the composition given in Table 2 under testing conditions given in Table 5 below, to give weld metals, and the resistance to hot cracking of the weld metals was determined as a cracking rate through a FISCO weld cracking test. The cracking rate was defined as a percentage (%) of the crack length relative to the bead length of a ruptured weld bead. Samples having a cracking rate of 10% or less (including those with crater crack) were accepted.

**TABLE 5**

| | |
|---|---|
| Base metal | JIS G3106 SM490A |
| Groove shape | 90° Y groove, root face = 10 mm, root gap = 2.4 mm |
| Wire | flux-cored wires having the compositions given in Table 1 (wire gage (diameter): 1.2 mm) |
| Shielding gas | 80% Ar-20% CO₂, flow rate = 25 liters per minute |
| Welding position | flat-position |
| Welding conditions | 280 A, 31 V, 35 cm/minute |
| Number of layers | 1 layer, 1 pass |
| Preheating temperature | room temperature (20°C to 23°C) |
| Number of repetitions | 2 |

### "Test 3. Fillet Welding Test (Weldability)"

Welding was performed using the flux-cored wires in Table 1 and the steel plate (coated with an inorganic zinc primer) for welded structure having the composition given in Table 2 under testing conditions given in Table 6 below, for testing the weldability.

**TABLE 6**

| | |
|---|---|
| Base metal | JIS G3106 SM490A |
| | *The steel plate surface was coated with an inorganic zinc primer to a thickness of 15 µm before testing. |
| Groove shape | T-joint fillet welding |
| Wire | Flux-cored wires having the compositions given in Table 1 (wire gage (diameter): 1.2 mm) |
| Shielding gas | 80 %Ar - 20% CO₂, flow rate = 25 liters per minute |
| Welding position | (1) horizontal fillet |
| | (2) vertical upward fillet |
| Welding conditions | (1) horizontal fillet: 300 A, 31 V, 30 to 50 cm/min |
| | (2) vertical upward fillet: 220 A, 24 V, 10 to 15 cm/min |
| Number of layers | 1 layer, 1 pass (the both sides of the fillet were welded) |
| Preheating temperature | room temperature to 100°C |

The test results obtained from Tests 1 to 3 are shown in following Tables 7 and 8, and in FIG. 1. Table 7 shows the compositions of weld metals obtained through welding using the flux-cored wires according to Examples and Comparative Examples. The remainder of the composition of each weld metal in Table 7 is Fe and inevitable impurities. Table 8 shows the mechanical properties, weldability, and cracking rates of the weld metals obtained in Tests 1 to 3. In Table 8, a property belonging to "Weldability" other than the bead smoothness is evaluated as "Good" when it is satisfactory; or evaluated as "Poor" when it is inferior. Of suchproperties belonging to "Weldability", the bead smoothness as given in Table 8 is evaluated as "Good" when it is good; evaluated as "Fair" when it is good but slightly impaired; and evaluated as "Poor" when it is inferior. The assessment (overall assessment) in Table 8 is evaluated as "Excellent", "Good", or "Poor".

**TABLE 7**

| Wire No. | Chemical composition (percent by mass) | | | | | | | | |
|---|---|---|---|---|---|---|---|---|---|
| | C | Si | Mn | Ni | Mo | Ti | Al | B | O |
| 1 | 0.07 | 0.11 | 1.8 | 0.58 | 0.07 | 0.060 | 0.010 | 0.0013 | 0.068 |
| 2 | 0.03 | 0.45 | 1.5 | 0.97 | 0.04 | 0.065 | 0.005 | 0.0040 | 0.053 |
| 3 | 0.04 | 0.10 | 0.8 | 0.85 | 0.22 | 0.027 | 0.003 | 0.0058 | 0.040 |
| 4 | 0.07 | 0.18 | 1.4 | 0.72 | 0.18 | 0.056 | 0.004 | 0.0015 | 0.062 |
| 5 | 0.04 | 0.29 | 0.7 | 0.63 | 0.05 | 0.072 | 0.004 | 0.0015 | 0.047 |
| 6 | 0.05 | 0.09 | 0.4 | 0.84 | 0.01 | 0.060 | 0.006 | 0.0055 | 0.043 |
| 7 | 0.03 | 0.04 | 0.4 | 0.60 | 0.04 | 0.066 | 0.005 | 0.0097 | 0.045 |
| 8 | 0.08 | 0.20 | 3.5 | 1.20 | 0.05 | 0.045 | 0.010 | 0.0043 | 0.052 |
| 9 | 0.05 | 0.11 | 2.1 | 0.74 | 0.42 | 0.050 | 0.015 | 0.0007 | 0.078 |
| 10 | 0.07 | 0.30 | 9.9 | 0.35 | 0.02 | 0.053 | 0.004 | 0.0015 | 0.038 |
| 11 | 0.02 | 0.47 | 0.5 | 1.08 | 0.02 | 0.025 | 0.013 | 0.0008 | 0.048 |
| 12 | 0.04 | 0.10 | 1.6 | 0.50 | 0.09 | 0.044 | 0.003 | - | 0.080 |
| 13 | 0.06 | 0.21 | 0.5 | 0.90 | 0.25 | 0.093 | 0.009 | 0.0038 | 0.052 |
| 14 | 0.07 | 0.17 | 0.8 | 0.87 | 0.25 | 0.030 | 0.003 | 0.0008 | 0.070 |
| 15 | 0.04 | 0.12 | 0.7 | 0.60 | 0.03 | 0.026 | 0.004 | 0.0036 | 0.050 |
| 16 | 0.07 | 0.28 | 0.8 | 0.70 | 0.12 | 0.028 | 0.006 | 0.0011 | 0.061 |
| 17 | 0.04 | 0.13 | 0.8 | 0.62 | 0.15 | 0.064 | 0.002 | 0.0005 | 0.035 |
| 18 | 0.04 | 0.18 | 0.7 | 0.98 | 0.10 | 0.070 | 0.003 | 0.0007 | 0.052 |
| 19 | 0.05 | 0.19 | 0.6 | 0.99 | 0.26 | 0.073 | 0.004 | 0.0013 | 0.045 |
| 20 | 0.04 | 0.30 | 2.0 | 0.94 | 0.16 | 0.068 | 0.005 | 0.0010 | 0.065 |
| 21 | 0.06 | 0.15 | 1.6 | 0.65 | 0.05 | 0.025 | 0.005 | 0.0015 | 0.049 |
| 22 | 0.06 | 0.26 | 1.2 | 0.74 | 0.12 | 0.045 | 0.009 | 0.0017 | 0.046 |
| 23 | 0.05 | 0.45 | 1.4 | 0.76 | 0.28 | 0.075 | 0.007 | 0.0023 | 0.060 |
| 24 | 0.05 | 0.29 | 0.6 | 0.79 | 0.07 | 0.028 | 0.004 | 0.0038 | 0.040 |

**TABLE 8**

| Wire No. | Mechanical properties | | | Weldability | | | | | | Assessment* |
|---|---|---|---|---|---|---|---|---|---|---|
| | 0.2%-Yield stress (MPa) | Tensile strength (MPa) | Absorbed energy (J) | Bead smoothness | Equality in leg length | Wettability of bead | Porosity resistance | Spatter suppression | Cracking rate (%) | |
| 1 | 643 | 680 | 108 | Good | Good | Good | Good | Good | 2 | Excellent |
| 2 | 649 | 694 | 68 | Good | Good | Good | Good | Good | 5 | Excellent |
| 3 | 655 | 702 | 112 | Good | Good | Good | Good | Good | 1 | Excellent |
| 4 | 712 | 773 | 74 | Good | Good | Good | Good | Good | 2 | Excellent |
| 5 | 611 | 672 | 87 | Good | Good | Good | Good | Good | 3 | Excellent |
| 6 | 602 | 665 | 95 | Good | Good | Good | Good | Good | 3 | Excellent |
| 7 | 593 | 660 | 96 | Good | Good | Good | Poor | Good | 30 | Poor |
| 8 | 746 | 808 | 16 | Good | Good | Good | Good | Poor | 4 | Poor |
| 9 | 793 | 843 | 9 | Good | Good | Good | Poor | Poor | 7 | Poor |
| 10 | 593 | 660 | 46 | Poor | Good | Good | Good | Poor | 2 | Poor |
| 11 | 542 | 611 | 102 | Good | Good | Poor | Good | Good | 3 | Poor |
| 12 | 620 | 688 | 43 | Poor | Good | Good | Good | Good | 1 | Poor |
| 13 | 685 | 740 | 31 | Poor | Good | Poor | Good | Good | 5 | Poor |
| 14 | 720 | 785 | 50 | Good | Good | Good | Good | Good | 4 | Good |
| 15 | 633 | 684 | 58 | Good | Good | Good | Good | Good | 6 | Good |
| 16 | 640 | 688 | 62 | Good | Fair | Good | Good | Good | 2 | Good |
| 17 | 645 | 693 | 75 | Good | Good | Good | Good | Fair | 0 | Good |
| 1B | 643 | 690 | 78 | Fair | Good | Good | Good | Good | 0 | Good |
| 19 | 651 | 702 | 54 | Good | Good | Good | Good | Good | 2 | Good |
| 20 | 654 | 708 | 51 | Good | Good | Good | Fair | Good | 1 | Good |
| 21 | 645 | 696 | 81 | Good | Good | Good | Good | Fair | 2 | Good |
| 22 | 676 | 721 | 64 | Good | Good | Good | Good | Fair | 2 | Good |
| 23 | 740 | 802 | 50 | Good | Good | Good | Good | Good | 3 | Good |
| 24 | 621 | 666 | 91 | Good | Good | Good | Good | Fair | 5 | Good |
| Desired value | ≥550 | ≥640 | ≥50 | - | | | | | | |

Table 8 demonstrates as follows. The flux-cored wires according to Examples Nos. 1 to 6 had compositions within the range specified in the present invention, showed satisfactory weldability, and gave weld metals having satisfactory mechanical properties even when the weld metals had low Ni contents.

In addition, the flux-cored wires according to Examples Nos. 1 to 6 had the compositions falling within the preferred range in the present invention and excelled in assessment.

Comparative Example No. 7 had an excessively low Si content to show poor porosity resistance due to insufficient deoxidation; had an excessively high B content to show poor resistance to hot cracking; and had a ratio ([Ti] + [Mo]) / ([F] + [Al]) exceeding the preferred range in the present invention to cause the weld metal to have poor low-temperature toughness. Comparative Example No. 8 had an excessively high Mn content to cause the weld metal to have poor low-temperature toughness. Comparative Example No. 9 had an excessively high Mo content to cause the weld metal to have poor low-temperature toughness and had an excessively high Al content to increase the spatter to thereby impair the porosity resistance.

Comparative Example No. 10 had an excessively low Ni content to cause the weld metal to have somewhat poor low-temperature toughness but had contents of the other compositions falling within the range specified in the present invention, and this mitigated the reduction of the low-temperature toughness to some extent. Comparative Example No. 11 had an excessively low C content to cause the weld metal to have insufficient strengths (0.2%-yield stress and tensile strength). Comparative Example 11 had an excessively high Ni content exceeding the range specified in the present invention to cause the weld metal to have a Ni content of more than 1.0 percent by mass. This sample had a ratio ([Ti] + [Mo]) / ([F] + [Al]) lower than the preferred range in the present invention to increase the spatter and to show poor weldability. Comparative Example No. 12 had excessively low Ni and B contents to cause the weld metal to have poor low-temperature toughness and had an excessively low F content to cause the weld metal to suffer from cold cracking. Comparative Example No. 13 had an excessively low Ti content to cause the weld metal to have poor low-temperature toughness.

Examples Nos. 14 to 24 satisfied the essential conditions specified in the present invention but do not satisfy the preferred conditions in the present invention. Accordingly, Example No. 14 to 24 hadassessments prior to those of Comparative Examples Nos. 7 to 13 but inferior to those of Examples No. 1 to 6.

FIG. 1 shows the mechanical properties and weldability of the weld metals obtained through welding using the flux-cored wires according to Examples and Comparative Examples as in Table 8. The graph in FIG. 1 is plotted with the abscissa indicating the total content of F and Al ([F] + [Al]) and the ordinate indicating the total content of Ti and Mo ([Ti] + [Mo]), in which the solid lines are lines at which the ratio ([Ti] + [Mo]) / ([F] + [Al]) stands at 0.5 and 2.5, respectively. According to the present invention, the contents of these elements are specified as Ti content: 0.06 to 0.30 percent by mass, Mo content: 0.01 to 0.30 percent by mass, F content: 0.05 to 0.40 percent by mass, and Al content: 0.05 percent by mass or less. Therefore, the total content of F and Al ([F] + [Al]) falls within the range of 0.05 to 0.45 percent by mass, and the total content of Ti and Mo ([Ti] + [Mo]) falls within the range of 0.07 to 0.60 percent by mass, and these ranges of the total contents are also shown as thin dashed lines in FIG. 1.

Table 8 and FIG. 1 demonstrate as follows. Examples Nos. 1 to 6 had ratios ([Ti] + [Mo]) / ([F] + [Al]) in the range of 0.5 to 2.5, had the respective compositions within the ranges specified in the present invention, had parameters within the shaded area in FIG. 1, and showed good low-temperature toughness and good weldability. In contrast, Comparative Examples Nos. 8 and 11 had ratios ([Ti] + [Mo]) / ([F] + [Al]) of less than 0.5, thereby increased the spatter, and showed poor weldability. Comparative Example No. 7 and Comparative Examples Nos. 9 and 12 had ratios ([Ti] + [Mo]) / ([F] + [Al]) of more than 2.5 or more and showed excessively high hardenability to cause the weld metal to have poor low-temperature toughness.

## Claims

1. A flux-cored wire for gas-shielded arc welding, including:
a steel sheath; and
a flux filled in the sheath,
wherein the wire as a whole comprises, as its chemical composition based on the total mass of the wire:
carbon (C) in a content of 0.03 to 0.07 percent by mass,
silicon (Si) in a content of 0.10 to 0.50 percent by mass,
manganese (Mn) in a content of 1.0 to 4. 0 percent by mass,
titanium (Ti) in a content of 0.06 to 0.30 percent by mass,
nickel (Ni) in a content of 0.50 to 0.95 percent by mass,
molybdenum (Mo) in a content of 0.01 to 0.30 percent by mass,
boron (B) in a content of 0.002 to 0.008 percent by mass,
fluorine (F) in a content of 0.05 to 0.40 percent by mass, and
iron (Fe) in a content of 85 to 93 percent by mass, and
wherein the wire as a whole has an aluminum (A1) content controlled to be 0.05 percent by mass or less.

2. The flux-cored wire for gas-shielded arc welding according to Claim 1,
wherein the flux contains, based on the total mass of the wire:
TiO₂ in a content of 4.5 to 8.5 percent by mass,
ZrO₂ in a content of 0.04 to 0.50 percent by mass,
SiO₂ in a content of 0.10 to 0.50 percent by mass,
Al₂O₃ in a content of 0.02 to 0.80 percent by mass, and
magnesium (Mg) in a content of 0.20 to 0.70 percent by mass.

3. The flux-cored wire for gas-shielded arc welding according to one of Claims 1 and 2,
wherein the wire has a ratio of the total content of Ti and Mo to the total content of F and Al [ ( [Ti] + [Mo] ) / ( [F] + [Al] ) ] of 0.5 to 2.5, wherein [Ti] , [Mo] , [F] , and [Al] represent the contents of Ti, Mo, F, and Al, respectively, in the wire.

## Patentansprüche

1. Fülldraht zum Lichtbogenschweißen mit Schutzgas, mit:
einem Stahlmantel; und
einem Flussmittel, mit dem der Mantel gefüllt ist,
wobei der Draht insgesamt als chemische Zusammensetzung auf der Basis der Gesamtmasse des Drahts folgendes umfasst:
Kohlenstoff (C) mit einem Anteil von 0,03 bis 0,07 Massenprozent,
Silizium (Si) in einem Anteil von 0,10 bis 0,50 Massenprozent,
Mangan (Mn) in einem Anteil von 1,0 bis 4,0 Massenprozent,
Titan (Ti) in einem Anteil von 0,06 bis 0,30 Massenprozent,
Nickel (Ni) in einem Anteil von 0,50 bis 0,95 Massenprozent,
Molybdän (Mo) in einem Anteil von 0,01 bis 0,30 Massenprozent,
Bor (B) in einem Anteil von 0,002 bis 0,008 Massenprozent,
Fluor (F) in einem Anteil von 0,05 bis 0,40 Massenprozent, und
Eisen (Fe) in einem Anteil von 85 bis 93 Massenprozent, und
wobei der Draht insgesamt einen auf 0,05 Massenprozent oder darunter geregelten Anteil an Aluminium (Al) aufweist.

2. Fülldraht zum Lichtbogenschweißen mit Schutzgas nach Anspruch 1, wobei das Füllmittel auf der Basis der Gesamtmasse des Drahts folgendes enthält:
TiO₂ in einem Anteil von 4,5 bis 8,5 Massenprozent,
ZrO₂ in einem Anteil von 0,04 bis 0,50 Massenprozent,
SiO₂ in einem Anteil von 0,10 bis 0,50 Massenprozent,
Al₂O₃ in einem Anteil von 0,02 bis 0,80 Massenprozent, und
Magnesium (Mg) in einem Anteil von 0,20 bis 0,70 Massenprozent.

3. Fülldraht zum Lichtbogenschweißen mit Schutzgas nach Anspruch 1 oder 2,
wobei der Draht ein Verhältnis des Gesamtanteils von Ti und Mo zu dem Gesamtanteil von F und Al [ ( [Ti] + [Mo] / ( [F] + [Al] ) ) ] von 0,5 bis 2,5 aufweist, wobei [Ti], [Mo], [F] und [Al] die entsprechenden Anteile von Ti, Mo, F und Al in dem Draht darstellen.

## Revendications

1. Fil fourré pour soudage à l'arc sous protection gazeuse, comprenant :
une gaine en acier ; et
un flux remplissant la gaine,
dans lequel le fil dans son ensemble comprend, en tant que composition chimique sur la base de la masse totale du fil :
du carbone (C) en une teneur de 0,03 à 0,07 pour cent en masse,
du silicium (Si) en une teneur de 0,10 à 0,50 pour cent en masse,
du manganèse (Mn) en une teneur de 1,0 à 4,0 pour cent en masse,
du titane (Ti) en une teneur de 0,06 à 0,30 pour cent en masse,
du nickel (Ni) en une teneur de 0,50 à 0,95 pour cent en masse,
du molybdène (Mo) en une teneur de 0,01 à 0,30 pour cent en masse,
du bore (B) en une teneur de 0,002 à 0,008 pour cent en masse,
du fluor (F) en une teneur de 0,05 à 0,40 pour cent en masse, et
du fer (Fe) en une teneur de 85 à 93 pour cent en masse, et
dans lequel le fil dans son ensemble a une teneur en aluminium (Al) régulée pour être inférieure ou égale à 0,05 pour cent en masse.

2. Fil fourré pour soudage à l'arc sous protection gazeuse selon la revendication 1, dans lequel le flux contient, sur la base de la masse totale du fil :
du TiO₂ en une teneur de 4,5 à 8,5 pour cent en masse,
du ZrO₂ en une teneur de 0,04 à 0,50 pour cent en masse,
du SiO₂ en une teneur de 0,10 à 0,50 pour cent en masse,
de l'Al₂O₃ en une teneur de 0,02 à 0,80 pour cent en masse, et
du magnésium (Mg) en une teneur de 0,2 à 0,70 pour cent en masse.

3. Fil fourré pour soudage à l'arc sous protection gazeuse selon l'une des revendications 1 et 2,
dans lequel le fil a un rapport de la teneur totale en Mo et Ti sur la teneur totale en Al et F [([Ti]+[Mo]) / ([F]+[Al])] de 0,5 à 2,5, dans lequel [Ti], [Mo], [F], et [Al] représentent les teneurs en Ti, Mo, F, et Al, respectivement, dans le fil.
